# EUROPEAN PATENT APPLICATION

(11) **EP 2 397 932 A1**
(43) Date of publication of application: **21.12.2011**
(21) Application number: 10187645.6
(22) Date of filing: 14.10.2010
(51) Int. Cl.: G06F 3/041

(54) **Light uniforming system for projecting type touch control apparatus**

(30) Priority: 18.06.2010 TW 099119970
(71) Applicant: Nlighten Trading (Shanghai) Co., Xu-Hai District Shanghai, 200233 (CN)
(72) Inventor: Li, Jian-Guo, Xu-Hui District (CN); Wu, Xin-Min, Xu-Hui District (CN); Guo, Qing, Xu-Hui District (CN); Lin, Chung-Ming, Taoyuan County 333 (CN)
(74) Representative: McCartney, Jonathan William

(57) **Abstract**

The present invention discloses a light uniforming system for projecting type touch control apparatus. This system comprises at least one infrared light source to generate an infrared light. At least one light-guiding device is optically coupled to the infrared light source to guide the infrared light to at least one optical module, wherein the optical module connects to at least one image generating device. The optical module receives the infrared light guided by the light-guiding device, and reflects the infrared light to the image generating device to generate a uniforming infrared image. At least one visible light source is introduced to generate at least one visible light, wherein the visible light is transmitted to the optical module and reflected to the imaging generating device to generate a visible light image. Furthermore, at least one projecting lens is used to receive and project the visible light image and the infrared image.

## Description

### FIELD OF THE INVENTION

The present invention relates to a touch control apparatus, and more particularly to a light uniforming system for projecting type touch control apparatus.

### BACKGROUND OF THE INVENTION

The technologies applied to touch panels are various, and they can be divided according to the different sizes of electronic devices. In small size electronic devices, such as personal digital assistants (PDA) and cell phones, most of them are employed with a resistive sensing touch panel. A new technique of a sensing touch panel which is raised by the smart phones with multi-touch relates to projection capacitive type. In electronic devices with large scale, traditionally, they employed the techniques such as infrared sensing, surface acoustic wave sensing, or surface capacitive sensing. Optical sensing is a newer technique, and has developmental potential for larger size applications. Otherwise, the manufacturers of touch panel are actively integrating the techniques, such as resistive sensing, capacitive sensing, or optical sensing, to form the built-in touch panels.

Regarding to the application of optical infrared sensing touch panel, the advantages of these touch panels adopted by infrared sensing touch technology include large size, fast response, high accuracy and extreme durability. Moreover, the uniformity of illumination radiated by the infrared light is very important for an infrared sensing touch system no matter whether the technique involves single touch or multi-touch.

Unfortunately, the uniformity of illumination radiated by the current infrared illuminating system, directly or indirectly, is poor because the illumination distribution of an infrared light-emitting diode (LED) is Gaussian distribution.

Furthermore, projectors may project a larger image which can overcome the limitation of the traditional monitors. No matter in the developments of market or technique, the projector is a very mature product. In terms of the functions, the projector is a video playing device which is the same with a computer monitor for displaying the image generated by a personal computer (PC), a notebook, or a DVD player etc.. However, the installation and operation of the projector are too complicated to the computer monitor. If the user would like to operate the projector smoothly, the user not only need to connect the video cable, power supply, and adjust the focus length, distance and gradient correction of the projector, but also need to change the video playing settings of the notebook. Even though the operation of the projector is complicated, it can easily project large images over 60 inches easily when the room or space is available.

The projecting mechanism of the projector involves the usage of a visible light source (such as a halogen lamp, an UHE lamp, an UHP lamp, a xenon lamp or LED etc.) to generate a visible light, and then passing through a filter (or color wheel, or spectroscope) for dividing the visible light into red, green and blue, followed by radiating to an imaging panel (such as liquid crystal display (LCD) panel, digital light processing (DLP) panel or liquid crystal on silicon (LCoS) panel). Next, the created image is transmitting to the projecting lens by light transmission or reflection, and then projecting on a screen or a wall. The imaging panel is the core of these optical processes. The scheme of the projector will be influenced by the various kind of imaging panel, such as the spectrophotometry, light-dividing mechanism, color, resolution, contrast and brightness of the projector which are different under different scheme. Based-on mature technology, the displaying effects of these projectors are almost the same. Thus, new functions are equipped into the projector, such as network management, automatic gradient correction, auto focus, displaying free of computer, wireless projecting etc., for enhancing the convenience of the projectors.

A touch smart table or a touch surface table introduces an infrared optical touch on an internal projection table to reach a multi-touch effect. In the recent technology, it has used a projector to project the desired image on the table and a set of infrared light sources to project the infrared light onto the table. As mentioned above, the cost of an infrared light-emitting diode module of the optical infrared touch panel is high, and the illumination distribution of the light-emitting diode is Gaussian distribution such that the uniformity of the illumination is poor. Whether single touch or multi-touch, the uniformity of the radiated illumination by the infrared light is very important in an infrared sensing touch system.

### SUMMARY OF THE INVENTION

In an attempt to solve the foregoing problems, the present invention discloses a projector equipped with an infrared light source. The projector can project a uniform infrared light onto a touch screen, and thereby the projecting screen receives a uniform infrared light for providing to the optical touch control system.

The present invention discloses a uniform lighting system for a projecting-type touch control apparatus. The system comprises an image generating device; an optical module disposed corresponding to the image generating device; an infrared light source to generate an infrared light; a light-guiding device coupled to the infrared light source to guide the infrared light to the optical module, wherein the infrared light is guided by the light-guiding device to generate an infrared image; a visible light source to generate a visible light, wherein the visible light is transmitted to the optical module and guided to the image generating device to generate a visible light image; and a projecting lens to receive and project the visible light image and the infrared image.

The present invention also discloses a uniform lighting system for a projecting-type touch control apparatus, and the system includes an infrared light source module for generating an infrared light; a projecting system which includes an optical module for receiving the infrared light to generate an infrared image and projecting the received infrared image.

One purpose of the present invention may be to provide a projector including an infrared light source. The projector can project light uniformly to facilitate projecting a uniforming infrared light source for the optical touch system to reach the purpose of the uniforming infrared light.

Another purpose of the present invention may be to introduce the infrared light source to a projector. The function of the projector that can project light uniformly to project a uniforming infrared light source free of setting another infrared light source device for saving cost and reducing the volume of the light uniforming system.

### BRIEF DESCRIPTION OF THE DRAWINGS

FIG. 1 shows an illustration of a light uniforming system for projecting type touch control apparatus.

FIG. 2 shows an illustration of a light uniforming system for projecting type touch control apparatus.

FIG. 3 shows an illustration of a light uniforming system for projecting type touch control apparatus.

FIG. 4 shows an illustration of a light uniforming system for projecting type touch control apparatus.

FIG. 5 shows an illustration of an embodiment of the light uniforming system for projecting type touch control apparatus.

### DETAILED DESCRIPTION OF THE PREFERRED EMBODIMENT

The invention hereinafter will be described in greater detail with preferred embodiments of the invention and accompanying illustrations. Nevertheless, it should be recognized that the preferred embodiments of the invention are not provided to limit the invention but to illustrate it. The present invention can be practiced not only in the preferred embodiments herein mentioned, but also in a wide range of other embodiments besides those explicitly described.

The terminologies used in this specification are only for explaining some specific embodiments of the present invention, and they should be used with the broadest reasonable way to appreciate.

The present invention discloses a light uniforming system for projecting type touch control apparatus. The light uniforming system combines the function of a projector that can project light uniformly with an infrared light source to generate a projected device having an optical touch system with a uniforming infrared light for projecting image synchronously.

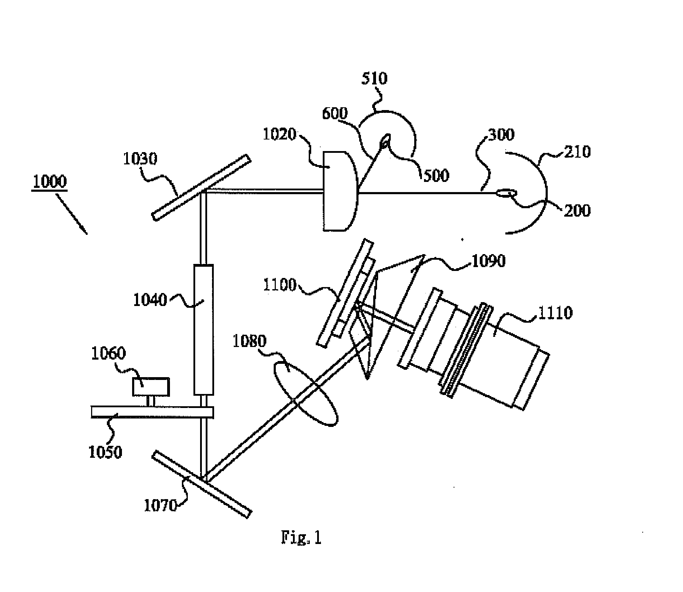

An embodiment of the present invention provides a uniform lighting system for projecting type touch control apparatus. Referring to FIG. 1, it shows an illustration of an internal structure of a digital light processing (DLP) projector with an infrared light source. The DLP projector 1000 comprises a visible light source 200, a first condensing lens 1020, a first refractive lens 1030, a light-guiding module 1040 (wherein the light- guiding module 1040 may be a light guiding bar, a fly's eye lens, or an integrated light beam), a RGB filter wheel 1050, a drive motor 1060, a second refractive lens 1070, a second condensing lens 1080, a totally internal reflection (TIR) prism module 1090, a digital micromirror display (DMD) chip 1100 and a projecting lens 1110. The visible light source 200 may include a visible light collecting mask 210. The visible light source 200 radiates a visible light 300 passing to the visible light collecting mask 210 to collect for directing to the first condensing lens 1020. After the light passes through the first condensing lens 1020 for focusing, the focusing light passes through the first refractive lens 1030 and into the light-guiding module 1040. The light-guiding module 1040 is utilized to direct the visible light to the RGB filter wheel 1050. At this time, the RGB filter wheel 1050 revolves and is driven by the drive motor 1060. After the visible light 300 passes through the RGB filter wheel 1050, it subsequently passes through the second refractive lens 1070 and is refracted to pass through the second condensing lens 1080 for focusing. After focusing, the visible light 300 is directed to the TIR prism 1090 and refracted to the DMD chip 1100, and a visible image signal 310 is sent to the DMD chip 1100 to control the angles of the mirrors on the DMD. The reflected visible image is directed to the TIR prism 1090 and is subsequently directed to the projecting lens 1110, followed by projecting the visible image. In the embodiment of the present invention, an infrared light source 500 is included in the DLP projector 1000. The infrared light source 500 is disposed adjacent to the visible light source 200, and the infrared light source 500 also includes an infrared light collecting apparatus 510. The infrared light source 500 radiates an infrared light 600 collected by the infrared light collecting apparatus 510, and thereby directs it to the first condensing lens 1020. The infrared light 600 is focused by the first condensing lens 1020 and passes through the first refractive lens 1030, and is then refracted and directed into the light-guiding module 1040. The light-guiding module 1040 is utilized to direct the infrared light 600 to the RGB filter wheel 1050, which is driven by the drive motor 1060 to rotate the RGB filter wheel 1050. After the infrared light 600 passes through the RGB filter wheel 1050, it subsequently passes through the second refractive lens 1070 and is refracted to pass through the second condensing lens 1080 for the purpose of focusing. After focusing, the infrared light 600 is directed to the TIR prism 1090 and refracted to the DMD chip 1100. The infrared light 600 is directed to the TIR prism 1090 and then is directed to the projecting lens 1110, followed by projecting the infrared light 600 away from the DLP projector 1000. It should be appreciated by any person skilled in the art that the infrared light source is not necessarily to be set adjacent to the visible light source 200. As long as the infrared light 600 radiated from the infrared light source 500 can be directed to the optical device of the DLP projector 1000, any suitable location for the infrared light source 500 may be used.

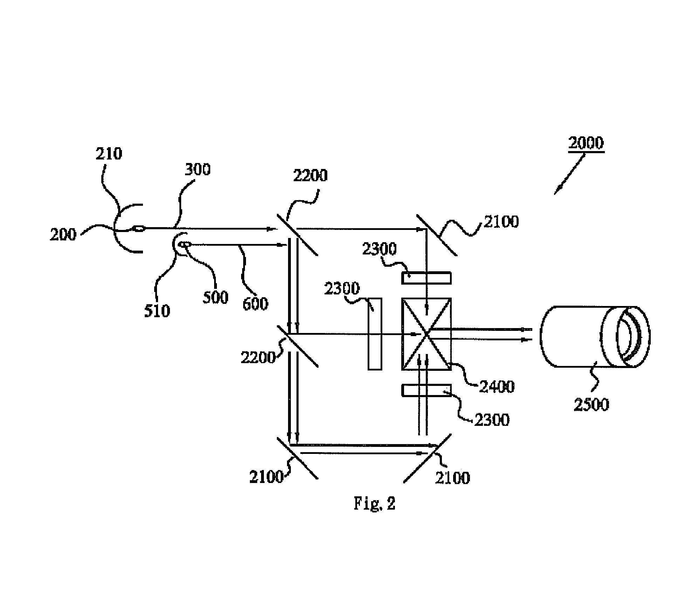

Another embodiment of the present invention is shown in FIG. 2, and it shows an illustration of an internal structure and light path of a liquid crystal display (LCD) projector equipped with an infrared light source. The LCD projector 2000 comprises a visible light source 200, a plurality of reflective lenses 2100, two beam splitters 2200, three LCD panel 2300, at least one condensing prism 2400 (which may be a dichroic prism system or a Philps prism system), and a projecting lens 2500. The infrared light source 500 is disposed at the side of the visible light source 200, and the infrared light source 500 includes an infrared light collecting apparatus 510. The infrared light source 500 radiates an infrared light 600 collected by the infrared light collecting apparatus 510, and then directed to the beam splitter 2200 to split the light, followed by reflecting the infrared light 600 by the reflective lens 2100. Then, the infrared light 600 passes through the LCD panel 2300 to reach the condensing prism 2400. Furthermore, the infrared light 600 is refracted by the condensing prism 2400 then directed to the projecting lens 2500. Finally, the LCD projector 2000 can project the infrared light 600 through the projecting lens 2500. It should be appreciated by any person skilled in the art that the infrared light source is not necessarily to be set by the visible light source 200. As long as the infrared light 600 radiated from the infrared light source 500 can be directed to the optical device of the LCD projector 2000, any suitable location of the infrared light source 500 may be used.

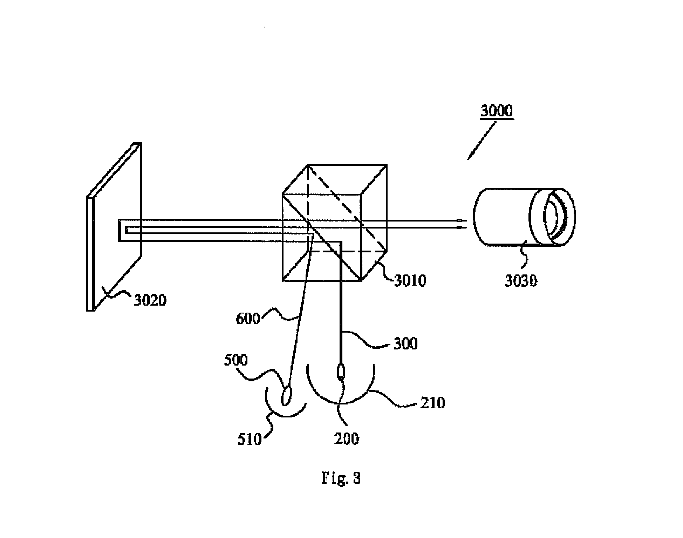

Still another embodiment of the present invention provides a light uniforming system for projecting type touch control apparatus. Referring to FIG. 3, it shows an illustration of an internal structure and light path of a liquid crystal on silicon (LCoS) projector introduced by an infrared light source. The LCoS projector 3000 comprises at least a visible light source 200, at least one polarization beam splitter 3010, at least one LCoS panel 3020, and a projecting lens 3030. The infrared light source 500 is disposed by the visible light source 200, and the infrared light source 500 includes an infrared light source collecting apparatus 510. The infrared light source 500 radiates an infrared light 600 collected by the infrared light source collecting apparatus 510, and then directed to the polarization beam splitter 3010. The infrared light 600 passes through the polarization beam splitter 3010 refracting to the LCoS panel 3020, and then reflecting back into the polarization beam splitter 3010, followed by directing to the projector lens 3030. Finally, the LCoS projector 3000 can project the infrared light 600 through the projecting lens 3030. It should be appreciated by any person skilled in the art that the infrared light source is not necessarily to be set at the side of the visible light source 200. As long as the infrared light 600 radiated from the infrared light source 500 can be directed to the optical device of the LCoS projector 3000, any required location of the infrared light source 500 may be set.

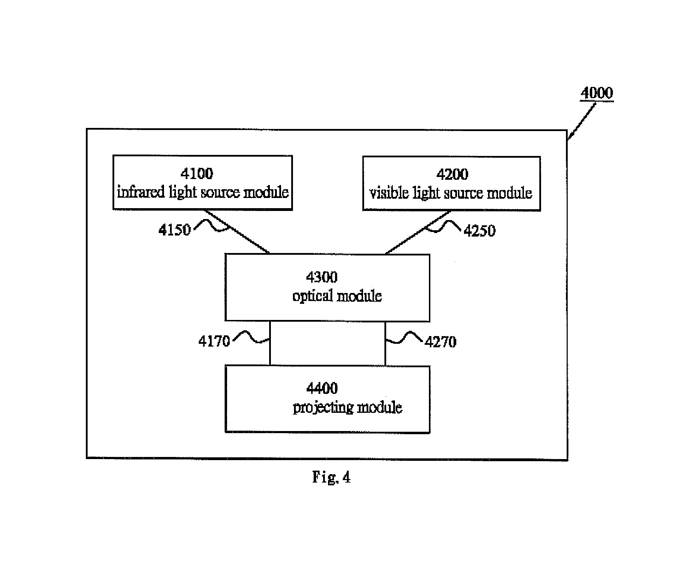

In an embodiment of the present invention, as shown in FIG. 4, it provides a light uniforming system 4000 for projecting type touch control apparatus. The light uniforming system 4000 comprises an infrared light source module 4100 for generating an infrared light 4150 propagating to an optical module 4300; a visible light source module 4200 for generating a visible light 4250 transmitting to the optical module 4300. The optical module 4300 is utilized to receive the infrared light 4150 to generate an infrared image 4170, and receive the visible light 4250 to generate a visible image 4270, respectively. The light uniforming system 4000 further comprises a projecting module 4400 for receiving the infrared image 4170 and the visible image 4270 which are transmitted from the optical module 4300. Thus, the light uniforming system 4000 can project the infrared image 4170 and the visible image 4270 through the projecting module 4400. In this embodiment, the optical module 4300 may be utilized to guide the infrared light 4150 and the visible light 4250, and transmit the infrared image 4170 and/or the visible image 4270 to the projecting module 4400.

In an embodiment of the present invention, it provides a light uniforming system for projecting type touch control apparatus. The light uniforming system comprises an infrared light source module for generating an infrared light; and a projected system which includes an optical module for receiving the infrared light to generate an infrared image. Thus, the system can project the infrared image.

In an embodiment of the present invention, the optical module includes, but is not limited to, at least one prism or lens. The prism or lens in the optical module further includes, but not limit to, a TIR prism, a dichroic prism system, a Philps prism system or a polarization beam splitter.

In an embodiment of the present invention, the infrared light source 500 and the infrared light source module 4100 includes, but is not limited to, an infrared line light source, an infrared laser, an infrared laser diode, an infrared laser light emitting element, an infrared light emitting diode, an infrared light emitting device or other similar devices. In a preferable embodiment, the infrared light source 500 is an infrared light emitting diode (IRLED or IRED) or an infrared laser diode.

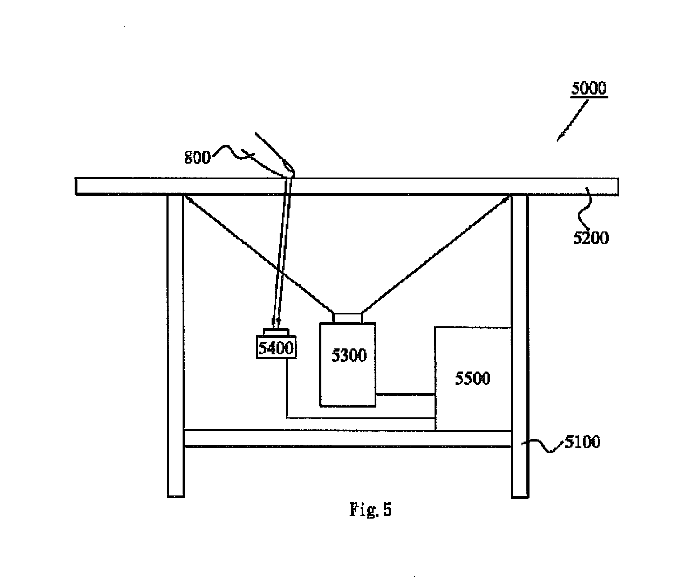

In an embodiment of the present invention, the uniform lighting system for a projecting-type touch control apparatus can be applied to a rear projection display and a touch control device, such as a touch smart table or a touch surface table, for projecting the desired image, and providing a uniforming infrared light for touch controlling system. Referring to FIG. 5, it shows an illustration of a smart touch table with the present inventive system. The smart touch table 5000 comprises a frame 5100, a rear projected touch table 5200, a uniform lighting system 5300, at least one IR camera 5400 and a computer 5500. The rear projected touch table 5200 is disposed above the frame 5100. The uniform lighting system 5300, the IR camera 5400 and the computer 5500 are built in the inside of the smart table 5000 by the frame 5100. The uniform lighting system 5300 and the IR camera 5400 are coupled to the computer 5500. When operating, an image signal from the computer 5500 is received by the uniform lighting system 5300, and a visible image is projected to the rear projected touch table 5200. At the same time, a uniform infrared light is projected to the rear projected touch table 5200 for the IR camera 5400 receiving. As a finger 800 of a user touches the rear projected touch table 5200, the IR camera 5400 will receive an infrared image reflected by the touch table 5200 by the finger 800 which is transferred to a signal to the computer 5500 for achieving the touch effect. In the uniform lighting system of the present invention, the visible image and the infrared light can be employed to project to the rear projected touch table 5200 at the same time. It is different from the prior art. Thus, the present invention can simplify the structure of the touch smart table, the touch surface table or other devices with identical performance of display and touch function. Moreover, the cost of the foregoing device can be reduced. Furthermore, the uniform lighting system 5300 of the present invention also can close the infrared light source and only project the visible image for a general projector using.

While the embodiments of the present invention disclosed herein are presently considered to be preferred embodiments, various changes and modifications can be made without departing from the spirit and scope of the present invention. The scope of the invention is indicated in the appended claims, and all changes that come within the meaning and range of equivalents are intended to be embraced therein.

## Claims

1. A light uniforming system for projecting type touch control apparatus, said system **characterized by** comprising:
at least one image generating device;
at least one optical module (4300) disposed corresponding to said image generating device;
at least one infrared light source (500) to generate an infrared light;
at least one light-guiding device coupled to said infrared light source (500) to guide said infrared light to said optical module (4300), and to said light-guiding device to generate an infrared image;
at least one visible light source (200) to generate at least one visible light, wherein said visible light is transmitted to said optical module (4300) and guided to said image generating device to generate a visible light image; and
at least one projecting lens(1110) to receive and project said visible light image and said infrared image.

2. The light uniforming system according to claim 1, further comprising a projection screen coupled to a projector for projecting said visible light image and said infrared image thereon.

3. The light uniforming system according to claim 1 or 2, wherein said light-guiding device includes a light guiding bar, a fly's eye lens or an integrated light beam.

4. The light uniforming system according to any preceding claim, wherein said image generating device includes a digital micromirror display device, liquid crystal display device or a liquid crystal on silicon device.

5. The light uniforming system according to any preceding claim, wherein said optical module (4300) comprises at least one prism, lens, totally internal reflection prism, dichroic prism system , Philps prism system or a polarization beam splitter.

6. The light uniforming system according to any of claims 2-5, wherein said projection screen is a rear projecting touch screen of a touch smart table, a touch surface table or devices with identical performance of display and touch function.

7. The light uniforming system according to any preceding claim, wherein said infrared light source (500) includes an infrared line light source, an infrared laser, an infrared laser diode, an infrared laser light emitting element, an infrared light emitting diode or an infrared light emitting element.

8. A light uniforming system for projecting type touch control apparatus, said system **characterized by** comprising:
at least one infrared light source module (4100) to generate at least one infrared light; and
at least one projection system, which includes at least one optical module (4300) to receive said infrared light to generate at least one infrared image and project said infrared image.

9. The light uniforming system according to claim 8, further comprising at least one image generating device to direct said visible light to be refracted or transmitted for generating a visible image to said optical module.

10. The light uniforming system according to claim 8 or 9, wherein said infrared light source (500) includes an infrared line light source, an infrared laser, an infrared laser diode, an infrared laser light emitting element, an infrared light emitting diode or an infrared light emitting element.

11. The light uniforming system according to any of claims 8-10, wherein said optical module (4300) comprises at least one prism, lens, totally internal reflection prism, dichroic prism system , Philps prism system or polarization beam splitter.
